# EUROPEAN PATENT APPLICATION

(11) **EP 4 439 290 A1**
(43) Date of publication of application: **02.10.2024**
(21) Application number: 23165115.9
(22) Date of filing: 29.03.2023
(51) Int. Cl.: G06F 9/48, G06N 20/00, G06F 9/50

(54) **ASYNCHRONOUS MACHINE LEARNING MODEL EXECUTION**

(71) Applicant: Aptiv Technologies AG, 8200 Schaffhausen (CH)
(72) Inventor: AGUILAR, Miguel Angel, 40235 Düsseldorf (DE); ALUVILA, Vinod, 31135 Hildesheim (DE)
(74) Representative: Bardehle Pagenberg Partnerschaft mbB Patentanwälte Rechtsanwälte

(57) **Abstract**

A method, a computer program product, and a computing device for processing of data with machine learning, ML, models are described. The method comprising receiving (710), at an ML controller (340, 540, 840, 940) from at least one ML application (320, 520, 820, 920), at least one request to run at least one ML model, queueing (720), at the ML controller (340, 540, 840, 940), pre-processed input data for the at least one ML model, running (730), by the ML controller (340, 540, 840, 940) using an ML runtime, the at least one ML model, wherein said running comprises executing the at least one ML model by the ML runtime, starting processing (732) of a second set of the queued input data with the at least one ML model independent from post-processing output data resulting from processing (731) a first set of the queued input data.

## Description

### Field of the invention

The present disclosure relates to a processing of data with machine learning, ML, models, in particular to the asynchronous execution of the ML models.

### Background

In recent years, ML algorithms have gained acceptance as a solution to solve a wide range of problems in multiple application domains. As a result, electronic devices nowadays are often required to support numerous applications that use a number of different ML models that need to be executed.

Systems for performing ML model executions, as known in the prior art, have constraints due to them being designed in a way that pre-processing and post-processing of data is coupled. Meaning that an application requesting an ML model to be executed will perform pre-processing of a first data set, provide this first data set as input for the requested ML model to be executed, but will then wait until a post-processing of any output data is performed, until the next pre-processing will take place and the second data set is provided to the ML model. It can also be said that these systems operate in a synchronous fashion, meaning the pre-processing, processing, and post-processing is done synchronously. Hence, an ML model execution would start with pre-processing data, then provide the data to the ML model and wait for the output until the next data is pre-processed and then provided to the ML model and so forth. It can also be said that the execution of the ML models is synchronously performed. This will however mean that the applications will be idle during the time the ML model is actually executed, because the application effectively waits for the output data until new input data is pre-processed and provided to the ML model.

Therefore, a need exists to provide improved processing of data with ML models, which can provide improved timing without the necessity of a complete new design of the already existing ML model execution systems.

### Summary of the invention

The invention is defined by the claims. Embodiments and aspects that do not fall within the scope of the claims are merely examples used for explanation of the invention.

The aforementioned need is fulfilled by the method, the computer program product and the computing device according to the current invention for processing data with ML models. It can also be said that the method, the computer program product and the computing device according to the current invention allow to run ML models asynchronously. Running an ML model is the process of processing data with an ML algorithm to calculate an output. This process is also referred to as ML inference or executing an ML model. ML inference basically entails deploying a software application into an ML runtime environment and let the software application run. Thereby, the ML algorithm exists at first in an untrained state, is then trained with training data, which refines the ML model, i.e. the weights of the ML model. The trained ML model is then used in the inference state with real input data. The current invention allows asynchronous input data processing with the ML models.

Thereby, the method for processing of data with ML models according to the invention comprises receiving, at an ML controller from at least one ML application at least one request to run at least one ML model. The request may thereby specify the ML model to be run and in addition may comprise some further information regarding how the ML model is to be run. For example, the further information may specify a specific ML runtime to be used to run the ML model. The method further comprises queueing, at the ML controller, pre-processed input data for the at least one ML model. The input data may be any data already pre-processed by the application to be used as input for the ML model. The pre-processing may thereby comprise to put the raw data into a format onto which the ML model was trained. However, it is contemplated that also all other kinds of pre-processing may be encompassed. The method further comprises running, by the ML controller using an ML runtime, the at least one ML model, wherein said running comprises executing the at least one ML model by the ML runtime. As stated above the execution of the ML model comprises processing the input data with the ML algorithm to produce output data. Thereby, the processing of the data comprises starting processing of a second set of the queued input data with the at least one ML model independent from post-processing output data resulting from processing a first set of the queued input data. In other words, the method provides for a decoupled processing of the input data from the pre- and/or post-processing of the application. This is achieved by queuing the input data and then providing the input data from the queue to the ML model, instead of providing the input data directly from the pre-processing to the ML model. The queuing acts as buffer for the input data, such that the pre-processing can continuously be performed and does not need to be performed synchronously with the ML model execution. This allows for an asynchronous execution of the ML models. This then also results in a decoupling of the post-processing from the pre-processing. The post-processing can start as soon as output data is available, the ML model can be provided from the queue with new input data without having to wait onto the post-processing to trigger new pre-processing, since the next input data is already in the queue. Hence, the ML model is fed with input data from the queue instead of the pre-processing function of the requesting application, which allows the ML model to be run continuously with input data without any wait times. This in turn also allows the application to make better use of the resources, since the pre-processing function can continuously perform pre-processing without having to wait on the ML model execution to finish.

In a preferred aspect of the method, the at least one request comprises an ML model reference ID to distinguish between ML models. If one application is requesting to run different ML models, then the ML model reference ID may be used to distinguish between the ML models. The ML model reference ID may be any numerical number, binary number, string, or tag, which uniquely can be associated with one ML model. In a non-limiting example, the ML model reference ID may be used to route the respective input data to the respective ML model.

In another preferred aspect of the method, the method may further comprise generating an ML model instance ID to distinguish between different instances. The ML controller may for each requested ML model to be run generate an ML runner instance, runner instance, or in short instance. This instance may be configured to interact with the ML runtime to cause the ML runtime to execute the ML model. The instance may include all information, transformations, and other adaptations, which are necessary to run the ML model on the ML runtime. The different instances may be distinguished by use of the ML model instance ID. The ML model instance ID may be any numerical number, binary number, string, or tag, which uniquely can be associated with an instance. By using the ML model reference ID and the ML model instance ID, the respective model requests can be correlated with the specific models to be run. This may in particular be relevant, if the same application requests to run multiple different models. In a non-limiting example, the ML model instance ID may be used to route the respective input data to the respective ML model.

In another preferred aspect of the method, the at least one request comprises an ML model execution ID to distinguish between different executions. The ML model execution ID may be any numerical number, binary number, string, or tag, which uniquely can be associated with an execution of an ML model. The ML model execution ID may in particular be helpful, when the same ML model is requested to be run but with different input data. In this case there may be some ambiguity between the used ML model instance IDs, such that the ML model execution ID may provide another level of refinement for the request. The ML model execution ID can also help to further distinguish between run requests from different applications. The combination of ML model instance ID and the ML model reference ID may uniquely corelate the requests from the applications and allow the ML controller to respond accordingly. It is also contemplated in a non-limiting example that the respective combination of IDs is used to uniquely route the respective input data.

In another preferred aspect of the method, the method further comprises outputting an indication to the at least one ML application once execution of the ML model has resulted in output data. It can also be said that the output data is provided indirectly to the application, since only an indication is provided not the output data itself. The indication can be in form of a callback function, which informs the application that the ML model inferred, and that output data can be retrieved. The indication can thereby for example include the memory address where to retrieve the output data. This has the advantage that the ML controller only needs to inform the application about the available output, such that resources are still kept free.

In another preferred aspect of the method, the method further comprises outputting output data directly to the at least one ML application once execution of the ML model has finished. Hence, once the ML model has executed and the processed input data have resulted in output data, the output data is provided to the application. This has the advantage that resources at the application are saved as compared to the indirect indication that output is available, in which case the application has to spend resources to collect the output data.

In another preferred aspect of the method, receiving the at least one request comprises receiving at least one load request, which initializes the at least one ML model and receiving at least one execution request, which cause the at least one ML model to be executed. The load request may also be referred to as a request for generating an ML model runner instance. The load request may include several parameters for the ML model to be executed, for example, ML model definition, memory usage etc. If the request is successful and the ML runtime permits the creation of the ML model runner instance, the ML model runner instance is created, and a reference thereto is given to the at least one requesting application. For example, the reference may be the ML model instance ID. This giving back to the at least one application can also be referred to as sending a response to the load request to the at least one application. This response may include information from the originally received run request, for example the ML model reference ID. Hence, the load request can in the successful case be answered with a response including the originally received ML model reference ID to indicate that the response relates to the specific request of a specific model and an ML model instance ID to identify that a model runner instance has been created. By using the respective information, the respective load request is uniquely correlated with the response. The execution request then can subsequently refer to the model runner instance and request the processing of input data by the ML model specifying the runner instance to be used. In other words, the load request initializes the ML model to be run, whereas the execution request than starts the processing of the input data with the respective ML model. The execution request may not only comprise the ML model instance ID for identifying the specific ML runner instance generated by the ML controller to be used for the ML model run, but also an ML model execution ID to distinguish between different executions. For example, if one application may request to execute the same ML model, then the application would use the same ML model instance ID, however if the ML model shall be used with different input data, for example from different data sources, then another layer of differentiation needs to be introduced, which is given by the ML model execution ID, which then distinguishes between the executions of the same ML model. This may not only be helpful in case of one requesting application, but also for the distinction between the execution requests from multiple applications.

In another preferred aspect of the method, the method may further comprise receiving ML model information from the at least one ML application, the ML model information comprising at least an ML model definition and ML model metadata comprising information specifying the ML runtime to execute the ML model, generating an ML model runner instance of the model information, the model runner instances being configured to interact with the ML runtime to cause the ML runtime to execute the ML model. The ML model definition comprises at least a graph definition and weights of the ML model.

In another preferred aspect of the method may further comprise receiving an unload request. The unload request may de-initialize a loaded ML model and releases the respective resources allocated to the respective ML model. These resources may at least encompass one of the following, core resources, memory resources, or the respective IDs associated to the ML model.

Although the aspects of the method are described in separate paragraphs, it shall be contemplated that all of the aspects of the method are combinable, and no aspects rules out the other. Hence, each of the aspects described herein are separately or together be combinable with the general aspect of the described method.

The above-mentioned need for improved processing of data with ML models is also fulfilled by a computer program product comprising computer-readable instructions that, when executed by a computer, cause the computer to perform the described method.

Furthermore, the need is also fulfilled by a computing device for processing of data with ML models according to the current invention. The computing device comprising a memory storing computer-readable instructions and an ML controller configured to receive at least one request to run at least one ML model from at least one ML application, queue pre-processed input data for the at least one ML model, run the at least one ML model using an ML runtime, wherein running the at least one ML model comprises executing the at least one ML model by the ML runtime,
starting processing of a second set of the queued input data with the at least one ML model independent from post-processing output data resulting from processing a first set of the queued input data.

In one aspect of the computing device, the ML controller comprises a proxy function for receiving the at least one request and the pre-processed input data and a listener function for monitoring output data and outputting an indication to the least one ML application once execution of the at least ML model has resulted in output data.

In another further aspect of the computing device, the at least one ML application and a target ML platform on which the at least one ML model is executed by the ML controller are embedded within the computing device.

### Brief Description of the Drawings

Various aspects of the present disclosure are described in more detail in the following by reference to the accompanying figures without the present disclosure being limited to the embodiments of these figures. In the appended figures, similar components or features may have the same reference number. Further, various components of the same type may be distinguished by a letter attached to the reference number. If only the reference number is used in the specification, the description is applicable to any one of the similar components having the same first reference number irrespective of the letter attached.
- Fig. 1: shows a schematic of a system according to the prior art for synchronous ML model execution;
- Fig. 2: shows a time-diagram of the ML model execution performed by the system as shown in Fig. 1;
- Fig. 3: shows a schematic of a system according to the current invention for allowing asynchronous ML model execution caused by one application;
- Fig. 4: shows a time-diagram of the ML model execution performed by the system as shown in Fig. 3;
- Fig. 5: shows a schematic of a system according to the current invention for allowing asynchronous ML model execution caused by multiple applications;
- Fig. 6: shows a time-diagram of the ML model execution performed by the system as shown in Fig. 5;
- Fig. 7: shows a flow chart of a method for asynchronous ML model execution;
- Fig. 8: shows a schematic of a system according to the current invention for allowing asynchronous ML model execution; and
- Fig. 9: shows a schematic of the data flow within the system as shown in Fig. 8.

### Detailed Description

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure. It should be understood that various changes may be made in the function and arrangement of elements without departing from the scope of the application as set forth in the appended claims.

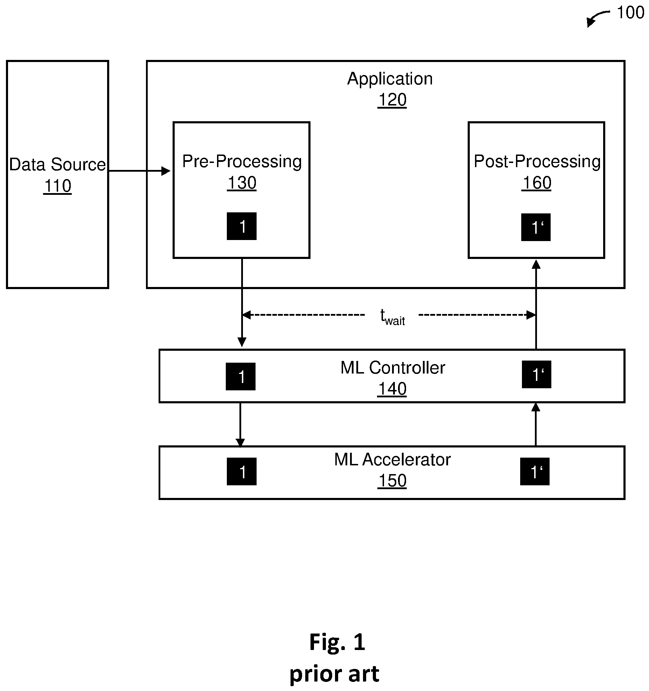

**Fig. 1** shows a schematic of a system 100 according to the prior art for synchronous ML model execution. The system 100 as depicted here encompasses a data source 110, which provides data to an application 120. The data source 110 may be a sensor, for example, a camera or a radar system.

The application 120 includes a pre-processing function 130 and a post-processing function 160. The pre-processing function 130 of the application 120 processes the incoming data. The pre-processing may include the adaptation of the raw input data from the data source 110 to a format the ML models were trained on. However, a person skilled in the art may recognize that also other pre-processing may be performed. For example, in case the input data result from a camera, then the pre-processing may encompass at least one of image resizing, image cropping, image quality improvement, like contrast, illumination, sharpness, or a combination thereof. As such, it can be recognized that the pre-processing can be very specific and tailored to the data source 110 from which the data originates. Once the pre-processing function 130 has pre-processed the data, the application 120 presents the data together with some further information to an ML controller 140 for executing the ML model. The further information may include an ML model definition and metadata. Thereby, the ML model definition may take the form of a graph definition file which contains the model architecture and the parameters (i.e. trained weights). The metadata may comprise information specifying a processing resource type for executing the ML model, scheduling information for the ML model, and/or information specifying an ML runtime to execute an ML model. The metadata may further include but is not limited to one or all of the following details about the ML model: the path of the model definition file, the name of the specific ML runtime to be used to execute the ML model, the processor core type on which the ML model is to be executed, profiling information of the ML model for one or multiple processor core types, memory requirements of the ML model, i.e., memory for the model parameters and runtime memory, the priority of the ML model and power or energy requirements of the ML model. It shall however also be contemplated that the application 120 and in particular the pre-processing function 130 only presents the pre-processed data to the ML controller 140, for example in case an ML model is already loaded and ready for execution, such that only the data needs to be provided. The provision of data to the ML controller 140 is indicated by the black rectangular with the number " 1 " in it, to indicate that one set of data is provided to the ML controller 140.

The ML controller 140 then uses the input data and in case it is provided with any further information to select the appropriate ML runtime environment and the ML model and execute the ML model on the ML accelerator 150. The ML accelerator 150 may encompass the ML runtime environments and the cores on which the runtime executes the ML model. Also here, the passing of the first set of data to the ML accelerator 150 is indicated by the black rectangular with the number "1" in it. It will then take some time until the ML model will produce some output data. This output data is indicated by the black rectangular with the number " 1' " in it. The output data is passed from the ML accelerator 150 to the ML controller 140 and from there to the post-processing function 160 of the application 120. The post-processing performed by the post-processing function 160 may for example include, in case the input data originated from a camera, extraction of classification results of objects in the image, extraction of bounding boxes and so on. Also here, it is contemplated that the post-processing may be specific to the input data respectively the data source the data originated from. Furthermore, it is also clear that the post-processing is dependent upon what shall be further done with the output data.

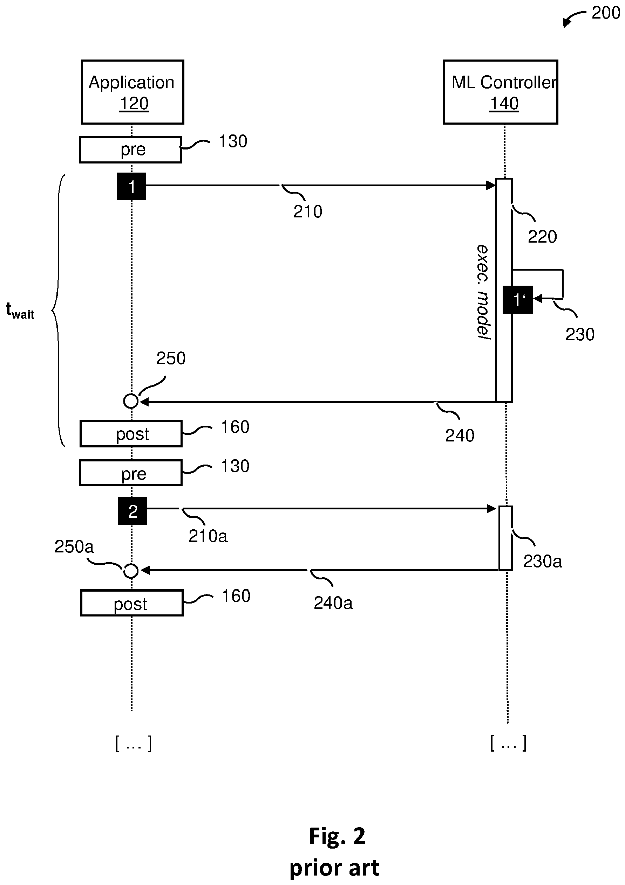

The system 100 as depicted in Fig. 1 has the disadvantage that the ML model is executed in a synchronous manner, which means that the pre-processing function 130 waits for the input data to be processed by the ML model and sometimes even by the post-processing function 160 until new input data is prepared to be provided to the ML controller 140. It can also be said that the application 120 is blocked from performing a further pre-processing until output data is present and post-processed. Hence, time is wasted which may be better used, the waste of time of the prior-art approach is highlighted in Fig. 2.

**Fig. 2** shows a time-diagram 200 of the synchronous ML model execution performed by the system 100 as shown in Fig. 1. Thereby, the diagram 200 shows the schematic timewise progression of data through the application 120 and the ML controller 140. Time progresses starting from the top of the diagram moving to the bottom.

At first, the application 120 starts with pre-processing of first input data received from a data source using the pre-processing function 130. This already takes some amount of time. Once the pre-processing is completed, the data is provided 210 to the ML controller 140. The data is again highlighted with a black rectangular with the number "1" in it. Once the data is received, the ML controller 140 starts the ML model execution 220. The time the ML model is executed is indicated by the bar. During the execution of the ML model, the ML controller uses an ML runtime of the ML accelerator 150. The inference of the ML model will take some time, which is indicated with the rectangular along the time axis of the ML controller 140. At the end of the inference of the ML model output data is provided 230 from the ML accelerator 150 to the ML controller. The output data is indicated by the black rectangular with the number " 1' " in it. The output data is then provided 240 to the application. Once it is received 250 by the application 120 it is provided to the post-processing function 160 to post-process the output data.

After the post-processing of the output data has taken place, the application 120, more specifically the pre-processing function 130 starts again with pre-processing of second input data, which are indicated by the black rectangular with the number " 2 " in it. This pre-processed input data is then provided 210a to the ML controller 140, which runs 230a the ML model with the respective input data and then provides 240a the output data to the application 120. Once the output data is received 250a, the application 120 starts the post-processing using the post-processing function 160. This process starts over and over again until the input data is processed.

As can be seen in Fig. 2, the system according to the prior art wastes time, since after the pre-processing of the first data until the post-processing of the output data resulting from the first input data, the application is blocked. It can also be said the application 120 is idling at least with respect to the pre-processing function 130. This time is indicated by " t_{wait} ". It can also be said that the prior art system is synchronously processing the input data, since the new pre-processing is not triggered until an output of the previous input data is post-processed.

This waste of time in the prior art is overcome by the method, computer program product and device according to the current application. More details thereof are presented in the following figures.

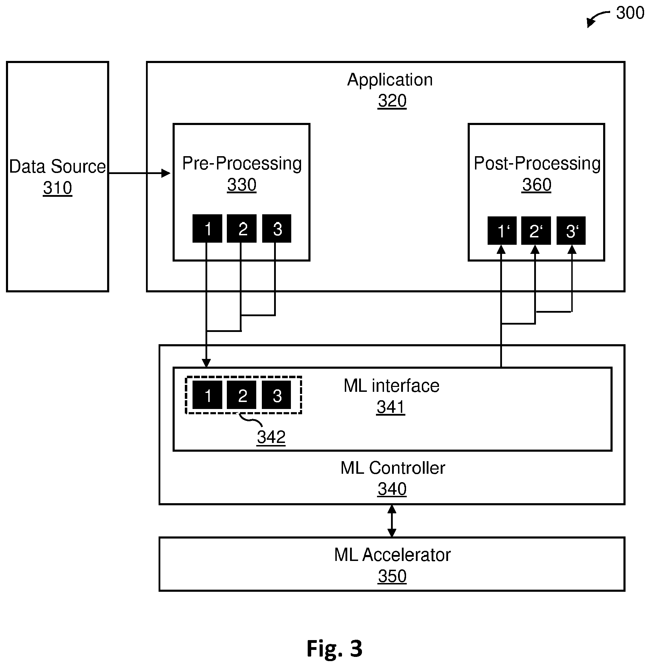

**Fig. 3** shows a schematic of a system 300 according to the current invention for allowing asynchronous ML model execution caused by one application 320. The system 300 comprises similar components as the system described with regards to Fig. 1, namely a data source 310, an application 320, a pre-processing function 330, a post-processing function 360, an ML controller 340 and an ML accelerator 350.

However, in the system 300, the ML controller 340 comprises in addition an ML interface 341, which incorporates at least one queue 342. The queue 342 allows the pre-processing function 330 to continuously provide the ML controller 340 with pre-processed input data, without having to wait. The pre-processed input data is indicated by the black rectangles with the numbers " 1 ", " 2 ", and " 3 " in them. The ML controller 340 can then provide the input data from the queue 342 to the ML model. Although in the here shown embodiment example, only one queue 342 is shown, it is contemplated that several queues are maintained, for example, one queue for each different ML model to be executed. The ML controller 340 can then use the queued input data for an input to the respective ML models, for example on a first come first serve basis.

As is evident from Fig. 3 in comparison to Fig. 1, the new functionality can solely be provided in the ML interface 341, which allows also to use it together with a legacy ML controller, which then only needs to interface with the functionality of the ML interface 341 without having to be altered. In this case, the ML interface 341 provides the legacy ML controller with input data instead of the pre-processing function 330. This reduces the need of a complete re-design of the ML controller. For the further illustration, it is however assumed that the ML interface 341 is part of the ML controller 340 and not separate thereto, however this should not be regarded to be limiting.

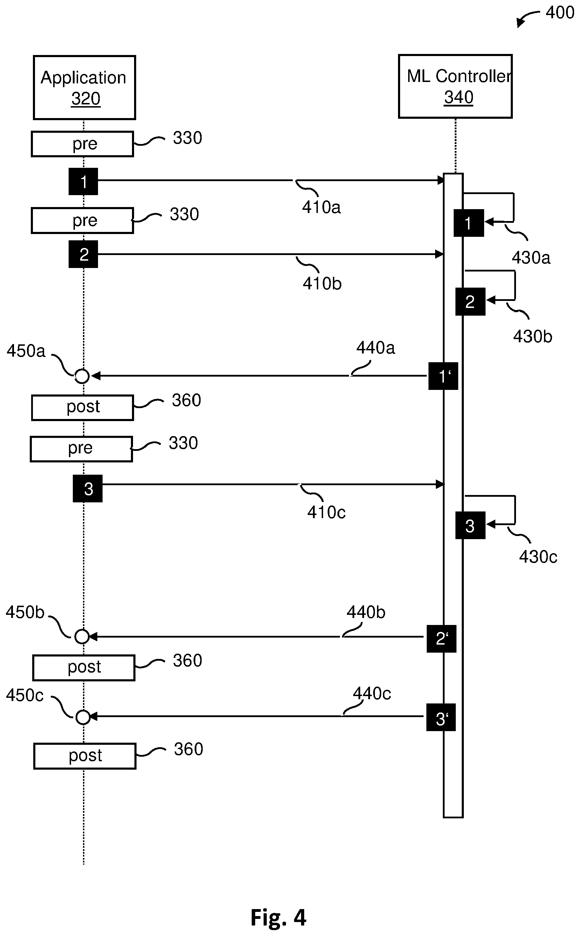

The timewise progression of the input data through the application 320 and the ML controller 340 is schematically depicted in Fig. 4.

**Fig. 4** shows a time-diagram 400 of the asynchronous ML model execution performed by the system 300 as shown in Fig. 3. Thereby, the diagram 400 shows the schematic timewise progression of data through the application 320 and the ML controller 340. Time progresses starting from the top of the diagram moving to the bottom.

At first, the application 320 starts with pre-processing of first input data received from a data source - not shown here - using the pre-processing function 330. Once the pre-processing is completed, the data is provided 410a to the ML controller 340. The data is again highlighted with a black rectangular with the number " 1 " in it. Once the data is received, the ML controller 340 starts the ML model execution 430a. Instead of waiting on the ML model output, the application 320 directly starts pre-processing second input data, which are highlighted with a black rectangular with the number " 2 " in it. Once the pre-processing of the second input data with the pre-processing function 330 is completed, the input data is provided to the ML controller 340. The second pre-processed input data is then stored within the queue 342 of the ML interface 341 to be used for the ML model run.

In the here shown example, the ML controller 340 after having queued the second input data has already finished the processing of the first input data and provides 440a first output data to the application 320 which are received 450a and can then be post-processed with post-processing function 360. The output data is indicated with the black rectangular with the number " 1' " in it. Directly after - or already during - the post-processing, the application 320 can pre-process third input data, which are indicated by the black rectangular with the number " 3 " in it. The pre-processed third input data can then be provided 410c to the ML controller 340, where they can be stored in queue 342 until being used for the ML model execution 430c. The ML controller 340 will then take the input data from the queue and fed the respective input data to the ML model.

In the here shown embodiment example, the ML controller 340 then provides 440b, 440c output data for the second input data followed by output data for the third input data to the application 320. Each of the output data is indicated with a black rectangular with the number " 2 " and " 3 ", respectively. Once the output data is received 450b, 450c by the application 320, the post-processing function 360 can post-process the respective output data.

As is evident from the time diagram 400, the pre-processing function 330 is decoupled from the post-processing function 360. This is achieved by the ML interface 341, which provides the application a way of interacting with the ML controller 340 which allows a constant input data stream to the ML controller 340 without the occurrence of any unnecessary wait time, as it is the case in the prior art as depicted in Fig. 2.

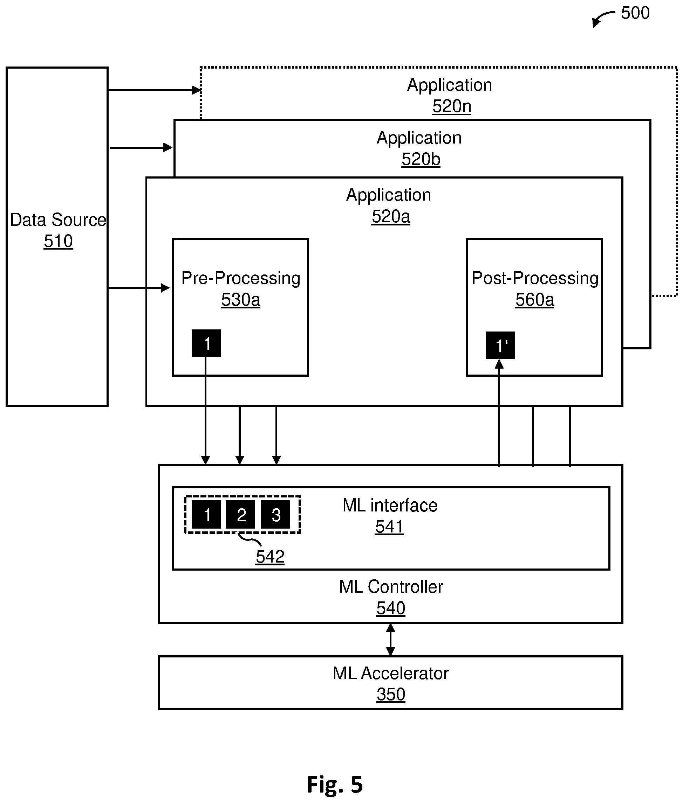

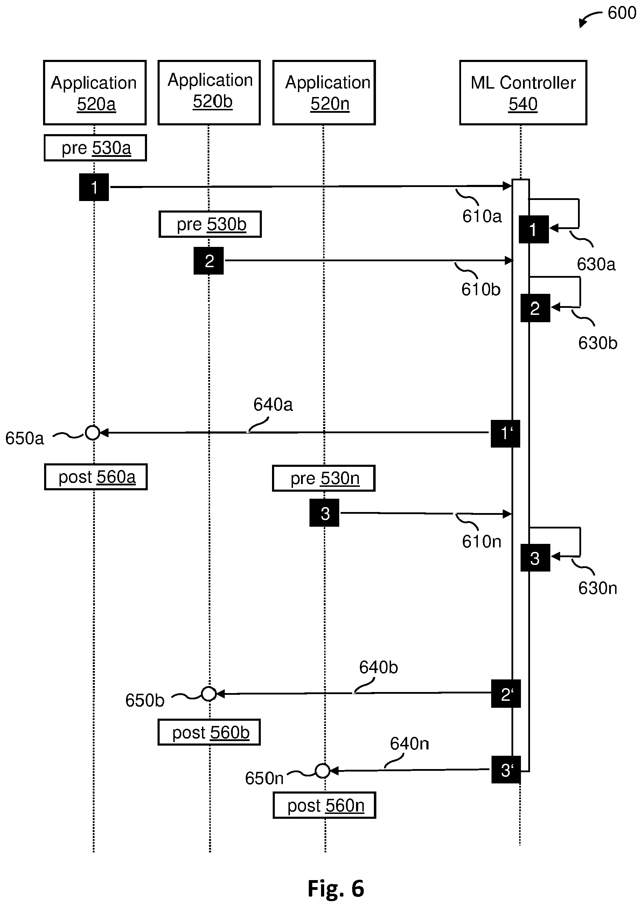

It is evident that this new decoupled aspect of the pre-processing and the post-processing is not only applicable to the execution of ML models requested by the same application, but also from different applications. This is depicted in Figs. 5 and 6.

**Fig. 5** shows a schematic of a system 500 according to the current invention for allowing asynchronous ML model execution caused by multiple applications 520a to 520n. The system 500 comprises similar components as the system described with regards to Fig. 3, namely a data source 510, applications 520a to 520n, an ML controller 540 and an ML accelerator 550. Each of the applications 520a to 520n may comprise a pre-processing function 530a to 530n and a post-processing function 560a to 560n. Each of the pre-processing functions 530a to 530n may provide input data to the ML controller 540. As already shown in the context of Fig. 3, the ML controller 540 may comprise an ML interface 541, which encompasses a queue 542 into which the input data from the multiple applications 520a to 520n can stored. Although in the here shown embodiment example, only one queue 542 is shown, it is contemplated that several queues are maintained, for example, one queue for each different application 520a to 520n and even further a queue for every ML model to be executed. The ML controller 540 can then use the queued input data for an input to respective ML models, for example on a first come first serve basis. Once the ML models have produced an output the ML controller 540 can provide the output data to the respective applications 520a to 520b for post-processing by their respective post-processing functions 560a to 560n. The timewise progression of the data is shown in Fig. 6.

**Fig. 6** shows a time-diagram 600 of the asynchronous ML model execution performed by the system 500 as shown in Fig. 5. Thereby, the diagram 600 shows the schematic timewise progression of data through the applications 520a to 520n and the ML controller 540. Time progresses starting from the top of the diagram moving to the bottom.

In the here shown embodiment example, the applications 520a and 520b first start with their pre-processing of input data using their respective pre-processing functions 530a and 530b. Although shown here in a sequential timewise order, it is contemplated that both applications can also work in parallel and provide the ML controller 540 at the same time with input data. Both applications 520a and 520b provide 610a, 610b their pre-processed input data to the ML controller 540. There the pre-processed input data is stored in the queue 542 of the ML interface 541 to be used for ML model execution 630a and 630b.

In the here shown embodiment example the first input data originating from application 520a first produces an output which is provided 640a to the application 520a. Once it is received 650a at the application 520a, the output data is post-processed with post-processing function 560a.

In the here shown embodiment example, application 520n perform pre-processing of third input data at the same time application 520a already performs post-processing of the output data resulting from the first input data. The application 520n then provides 610n the pre-processed input data to the ML controller 540 where they are queued and then used for ML model execution 630n.

Then also the second and third input data result in output data, which are then provided 640b and 640n to the respective applications 520b and 520n from which the corresponding input data originated. Once the output data is received 650b and 650n at the applications 520b and 520n, the output data is post-processed using the respective post-processing functions 560b and 560n of applications 520b and 520n, respectively.

Also here, it can be seen that the pre-processing and the post-processing is decoupled and that the interface in the ML controller allows for asynchronous execution of ML models.

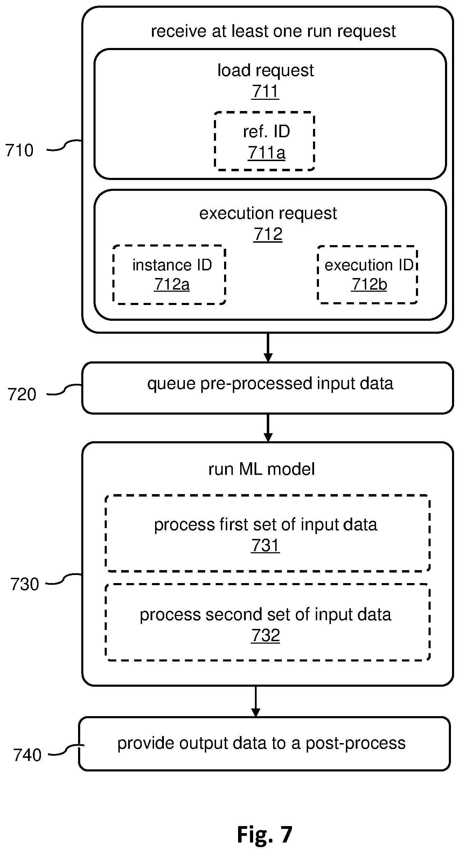

As evident from Figs. 4 and 6, input data can originate from one application or from multiple applications and the ML controller can run the same or different ML models, as such there must be a way of associate the respective input data with the ML models and the application requesting it to be run. How this is done will be described in more detail in context of Fig. 7.

**Fig. 7** shows a flow chart of a method 700 for asynchronous ML model execution. The method can be executed, for example, by an ML controller 340 or 540 as shown in Figs. 3 and 5. The method starts at step 710 with receiving, at the ML controller from at least one ML application, at least one request to run at least one ML model. A run request may include an ML model load request 711, with which the ML model is initialized and an ML model execution request 712, with which the ML model is executed. Executing the ML model means to use the ML model to process input data resulting in output data. As stated above, executing the ML model can also be called performing inference of the ML model. In context of the current application, the run request is contemplated to be able to encompass both the ML load request 711 and the ML execution request 712. Thereby, it is also contemplated that the ML load request 711 and the ML execution request 712 may be received at the same time by the ML controller or at different times depending upon the implementation of the application. It shall also be contemplated that the ML load request 711 and the ML execution request 712 are completely timewise decoupled, still this shall be regarded in the meaning of the current application as a run request.

In order to distinguish between different ML models, the run request, e.g. the ML load request 711, may encompass an ML model reference ID 711a. The ML model reference ID may be a unique ID given to each ML model. The ML model reference ID 711a may thereby be generated by the application and provided to the ML controller. The run request, e.g. the ML execution request 712, may also comprise at least one of an ML model instance ID 712a or an ML model execution ID 712b. The ML model instance ID 712a identifies the ML model runner instance to be used. The ML model execution ID may be used in case there is an ambiguity with regards to the ML model runner instances, for example the application wants to use the same ML model runner instance but with different inputs. In this case, the ML execution request 712 may also comprise an ML model execution ID 712b, with which the different executions of the same ML model can be distinguished.

After the ML controller has received the run request in step 710, the method progresses to queuing of the incoming pre-processed input data in step 720. Thereby, the input data may already be provided with the run request in step 710 or may be received separately after the run request. It is also conceivable that upon the reception of the run request in step 710, the ML controller allocates memory for the respective queue for input data to be used with the ML model and then either receives the respective input data and stores it in the respective memory, or provides the application with the memory address, so that the application can store the input data itself at the respective memory address.

Once the model run request is received in step 710 and the input data is queued in step 720, the method progresses to step 730, which encompasses to run the ML model. Thereby, the running encompasses the ML model execution. As stated above, running or executing an ML model means that input data is processed by the ML model. As such, the step 730 of running the ML model also comprises processing 731, 732 of input data with the respective ML model. Thereby, because the ML controller according to the current inventions works in a decoupled manner from the pre- and post-processing of the application, the processing comprises starting processing 732 of a second set of queued input data with the at least one ML model independent from post-processing output data resulting from processing 731 a first set of the queued input data. In other words, the ML controller according to the invention allows to process input data in an asynchronous manner, which overcomes the drawback of synchronous processing, where the application will be blocked until the ML model has produced output data and the output data has been post-processed. This allows the application to make use of otherwise wasted time, for example, to already pre-process new input data, such that the ML controller can constantly be provided with new input data.

The method 700 also includes the step of providing 740 output data to a post-processing function of an application. This provision 740 of output data can be performed by sending the output data to the application or by a callback function, which just informs the application that the requested ML model run has resulted in output data and the output data can be retrieved.

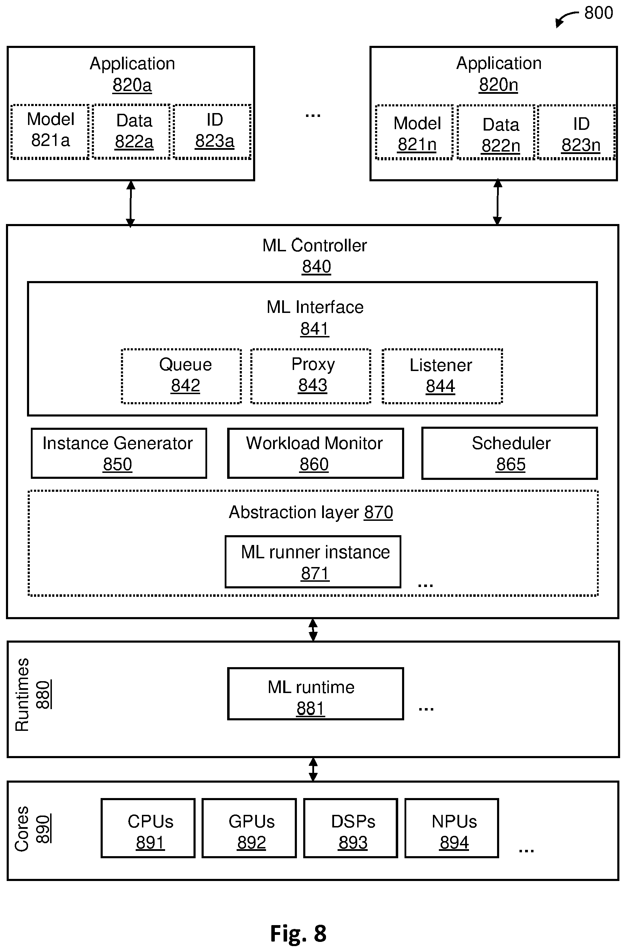

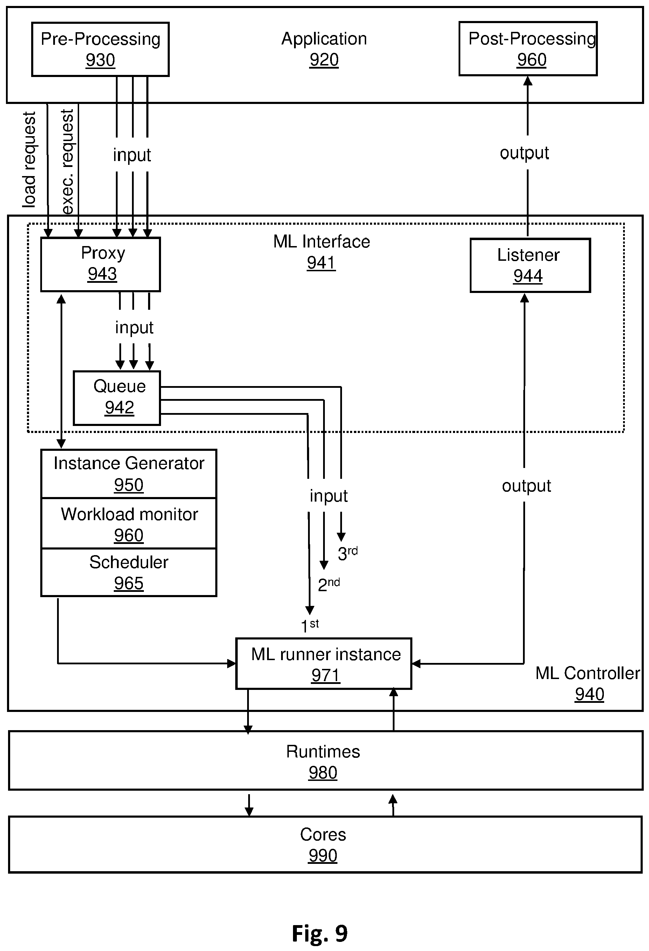

A more detailed view of the inner workings of the ML controller and the data flow within the ML controller is depicted in Figs. 8 and 9.

**Fig. 8** shows a schematic of a system 800 according to the current invention for allowing asynchronous ML model execution. The system 800 comprises as main component the ML controller 840. The ML controller 840 comprises an ML interface 841, which provides an interface to the applications 820a to 820n interacting with the ML controller 840. The ML interface 841 thereby provides for the input data and output data exchange with the applications 820a to 820n. The ML interface 841 comprises at least one queue 842 into which incoming input data can be stored. Thereby the ML interface 841 comprises a proxy function 843 and a listener function 844. The proxy function 843 is used to receive ML model run requests from the applications 820a to 820n. Thereby, the requests may already comprise input data 822a to 822n and information regarding the ML model to run. The information may comprise the ML model definition 821a to 821n and in some cases also at least one ID 823a to 823n, which can take the form of an ML model reference ID, an ML model instance ID, and/or an ML model execution ID. The proxy function 843 then stores the input data in the queue 842 and instructs the ML controller 840 to perform the respective ML model run. The ML interface 841 also encompasses a listener function 844. This listener function 844 monitors the ML model run and in particular monitors for resulting output data of any ML model run. Once the listener function 844 has identified that the ML model run has produced output data, it indicates this to the respective application 820a to 820n which provided the respective request and input data. In the here shown embodiment example, the ML interface 841 is part of the ML controller 840. However, it should be understood that the ML interface 841 may also be provided as stand-alone software, which may be used as an addition to existing ML controllers in order to enable them to perform asynchronous ML model execution. For this purpose, the ML interface 841 may comprise or may be provided with all necessary libraries and APIs to interface with the respective ML controllers.

In the here shown embodiment example, the multiple applications 820a to 820n may in addition to the ML model definition 821a to 821n, the input data 822a to 822n and the IDs 823a to 823n also provide further information to the ML controller 840. The further information may comprise metadata which provide relevant information to the ML controller 840 in order to enable generation of ML runner instances and subsequent execution of the ML model. The metadata may include but is not limited to the following details about the ML model, the path to the model definition file, the name of the specific ML runtime to be used to execute the ML model, the processor core type on which the ML model is to be executed, profiling information of the ML model for one or multiple processor core types, memory requirements of the ML model, i.e., memory for the model parameters and runtime memory, the priority of the ML model and power or energy requirements of the ML model.

With the information provided to the ML controller 840, the ML controller executes the specified ML model. Thereby, the here shown ML controller 840 comprises a model runner instance generator 850, an ML workload monitor 860 and an ML model scheduler 865.

The model runner instance generator 850 is configured to create an ML model runner instance 871 to interact with a specified ML runtime 881 of the available ML runtimes 880 specified by the respective application 820a to 820n requesting the ML model run. For the creation of the model runner instance, the model runner instance generator 850 may access one or more API libraries which contain API information for the specific ML runtime. An API library may be provided for each of the supported ML runtimes 881. By using the API information, it is possible for the ML runner instance to interact with the ML runtime 881 in accordance with the API for that ML runtime 881. In other words, the runner instance acts as an interface between the ML controller 840 and the ML runtimes 880. There can be as many ML runner instances as required as long as a memory budget allows for it. The ML model runner instances are associated with respective ML model instance IDs which are generated by the ML controller 840 and given to the applications 820a to 820n, so that the applications 820a to 820 n can use the respective ML model instance IDs in their ML model execution requests to identify the ML model to be executed.

The ML workload monitor 860 is a module responsible for keeping track of the hardware platform resource usage by the ML models. The monitoring performed by the ML workload monitor 860 may involve monitoring the usage of execution cores 890 (ML processing resources) and/or memory usage. Other system parameters may also be monitored, for example power or bandwidth consumption. It should be understood that any system parameter indicating resource usage by the system may be monitored. For example, as described above, there can be as many ML runner instances 871 as required by the applications 820a to 820n as long as a memory budget allows for it. As such, the ML workload monitor 860 may also be configured to keep track of the current memory usage.

The information obtained by the ML workload monitor 860 may be outputted to the ML model scheduler 865 to aid in scheduling decisions. Furthermore, the information may be output to a user via a user interface (not shown) so that developers can understand the workloads being deployed.

The ML model scheduler 865 is a module responsible for orchestrating the platform resource usage by the ML models. Scheduling decisions taken by the ML model scheduler 865 may be based on the metadata of the ML models provided by the requesting application 820a to 820n.

The ML controller 840 is configured to target highly heterogenous platforms with multiple ML runtimes 880 and execution core types 890. In general, the ML controller 840 and its abstraction layer 870 allow applications 820a to 820n to work with any ML runtime 881 including open source (such as but not limited to Tensorflow, TFLite, TVM) or proprietary solutions. The mentioned open source and proprietary ML runtimes are just examples, and the embodiments provide interfaces with ML runtimes 880 in a generic way by means of the abstraction layer 870. In other words, the system is not bound to any specific ML runtime. In terms of processing cores 890, the ML controller 840 is also not limited to specific types. Processing resources including a CPU 891, GPU 892, DSP 893, and/or NPU 894 or other core types may be used by the ML controller 840.

The data flow and interaction of the components described in Fig. 8 are further detailed din Fig. 9.

**Fig. 9** shows a schematic of the data flow within the system as shown in Fig. 8. For better illustrative purposes only one application 920 is depicted. This shall however not to be understood to be limiting and also multiple applications can be present as it is the case in Fig. 8.

The application 920 can request the processing of input data by an ML model. The application 920 can send the request to the ML interface 941 as described above. For example, the application 920 may at first send an ML model load request to the ML controller 940. The ML model load request may include an ML model reference ID to be able to distinguish between the ML models. Based on the ML load request, the model runner instance generator 950 will create an ML runner instance 971. This ML runner instance 971 will be associated with an ML model instance ID by the ML controller in order to allow to distinguish between different ML runner instances. The ML controller will then return this ML model instance ID together with the initial ML model reference ID to the application, such that the application knows that the respective ML runner instance 971 for the respective requested ML model has been created. Then the application 920 can send an ML execution request to the ML controller, in which the application 920 specifies the ML runner instance 971 to be used by ease of the ML model instance ID. If the same ML runner instance shall be used with different inputs, e.g. inputs from different data sources, the application 920 can also include in the ML execution request in addition to the ML model instance ID an ML model execution ID, in order to also distinguish between different executions of the same ML model.

As part of the run request or separately therefrom, the application 920 can provide from its pre-processing function 930 input data to the ML interface 941. More precisely to the proxy function 943 of the ML interface 941. The input data is then queued in the queue 942 of the ML interface 941. Although only one queue 942 is shown here, it is contemplated that also multiple queues can be used, for example one for each ML model to be executed.

The input data for the ML model is forwarded to the ML runner instance 971 to then be provided to the respective ML runtime 980 to be processed. As shown here, the input to the ML runner instance 971 is from the queue 942 of ML interface 941. This means the provision of the input data is decoupled from the pre-processing function 930 of the application 920. Which in turn means the application 920 can constantly provide the ML interface 941 with new input data for the ML model without being blocked until the execution of the ML model with one set of input data has been finished.

Once the ML runner instance 971 has produced output data, the listener function 944 of the ML interface 940 will either be informed that output data is ready, or the listener function 944 itself will monitor the ML runner instance 971 and recognize when output data is ready. The listener function 944 will then inform the requesting application 920, respectively the post-processing function 960 that output data is available, so that it can be retrieved by the post-processing function 960. It shall also be contemplated that the listener function 944 is receiving the output data from the ML runner instance 971 and then provides it to the post-processing function 960. As evident, the provision of the output data to the post-processing function 960 is decoupled from the input data provision by the pre-processing function 930. This decoupling is achieved by the functionality of the ML interface 941 which facilitates, due to the queueing of the pre-processed input data, a timewise decoupling of the pre- and post-processing. The listener function 944 can use one or all of the above-mentioned IDs to associate the output data to the respective request and inform the application 920 correspondingly.

While the systems as depicted throughout the application include certain components, one of ordinary skill will appreciate that the systems can include more components than those shown. The components can include software, hardware, or one or more combinations of software and hardware. For example, in some implementations, the components of the systems can include and/or can be implemented using electronic circuits or other electronic hardware, which can include one or more programmable electronic circuits, and/or can include and/or be implemented using computer software, firmware, or any combination thereof, to perform the various operations described herein. The software and/or firmware can include one or more instructions stored on a computer-readable storage medium and executable by one or more processors of the electronic device implementing the respective operations.

It is to be understood that the claims are not limited to the precise configuration and components illustrated above. Various modifications, changes and variations may be made in the arrangement, operation and details of the systems, methods, and apparatus described herein without departing from the scope of the claims.

## Claims

1. A method for processing of data with machine learning, ML, models, the method comprising:
receiving (710), at an ML controller (340, 540, 840, 940) from at least one ML application (320, 520, 820, 920), at least one request to run at least one ML model;
queueing (720), at the ML controller (340, 540, 840, 940), pre-processed input data for the at least one ML model;
running (730), by the ML controller (340, 540, 840, 940) using an ML runtime, the at least one ML model, wherein said running comprises:
executing the at least one ML model by the ML runtime;
starting processing (732) of a second set of the queued input data with the at least one ML model independent from post-processing output data resulting from processing (731) a first set of the queued input data.

2. The method of claim 1, wherein the at least one request comprises an ML model reference ID (711a) to distinguish between ML models.

3. The method of claim 2, wherein at least two requests are received, wherein the at least two requests are received from a same ML application (320, 520, 820, 920) and the at least two requests relate to different ML models.

4. The method of any of the preceding claims, the method further comprising:
generating an ML model instance ID (712a) to distinguish between different ML instances.

5. The method of any of the preceding claims, wherein the at least one request comprises an ML model execution ID (712b) to distinguish between executions.

6. The method of claim 5, wherein at least two requests are received and the at least two requests relate to the same ML model.

7. The method of any of claims 2 to 6, wherein the at least one of the ML model reference ID (711), the ML model instance ID (712a), or the ML model execution ID (712b) is used to associate sets of queued input data with the execution of the respective ML model.

8. The method of any of the preceding claims, wherein the method further comprises:
outputting (740) an indication to the at least one ML application (320, 520, 820, 920) once execution of the ML model has resulted in output data.

9. The method of any of the preceding claims, wherein receiving (710) the at least one request comprises:
receiving at least one load request, which initializes the at least one ML model; and
receiving at least one execution request, which cause the at least one ML model to be executed.

10. The method of any of the preceding claims, further comprising:
receiving ML model information from the at least one ML application, the ML model information comprising at least an ML model definition and ML model metadata comprising information specifying the ML runtime to execute the ML model;
generating an ML instance, the ML instance being configured to interact with the ML runtime to cause the ML runtime to execute the ML model.

11. The method of claim 10, wherein the ML model definition comprises at least a graph definition and weights of the ML model.

12. A computer program product comprising computer-readable instructions that, when executed by a computer, cause the computer to perform the method of any of claims 1 to 11.

13. A computing device for processing of data with machine learning, ML, models, the computing device comprising:
a memory storing computer-readable instructions; and
an ML controller (340, 540, 840, 940) configured to:
receive at least one request to run at least one ML model from at least one ML application (320, 520, 820, 920);
queue pre-processed input data for the at least one ML model;
run the at least one ML model using an ML runtime, wherein running the at least one ML model comprises:
executing the at least one ML model by the ML runtime;
starting processing of a second set of the queued input data with the at least one ML model independent from post-processing output data resulting from processing a first set of the queued input data.

14. The computing device of claim 13, wherein the ML controller (340, 540, 840, 940) comprises:
a proxy function for receiving the at least one request and the pre-processed input data; and
a listener function for monitoring output data and outputting an indication to the least one ML application once execution of the at least ML model has resulted in output data.

15. The computing device of any of claims 13 or 14, wherein the at least one ML application (320, 520, 820, 920) and a target ML platform on which the at least one ML model is executed by the ML controller (340, 540, 840, 940) are embedded within the computing device.
